# EUROPEAN PATENT APPLICATION

(11) **EP 2 372 880 A2**
(43) Date of publication of application: **05.10.2011**
(21) Application number: 11156502.4
(22) Date of filing: 01.03.2011
(51) Int. Cl.: H02K 7/00, H02K 7/20, H02K 7/18, H02K 19/34, H02K 19/38, H02K 16/04, B60K 6/485

(54) **Low profile starter-generator**

(30) Priority: 30.03.2010 US 749810
(71) Applicant: Honeywell International Inc., Morristown, NJ 07962 (US)
(72) Inventor: Anghel, Cristian, Morristown, NJ 07962-2245 (US); Scherzinger, William, Morristown, NJ 07962-2245 (US); Xu, Ming, Morristown, NJ 07962-2245 (US); Down, Ed, Morristown, NJ 07962-2245 (US); Pearson, Wayne, Morristown, NJ 07962-2245 (US)
(74) Representative: Buckley, Guy Julian

(57) **Abstract**

A power system for a vehicle may comprise an electric machine interposed between an engine and a transmission of the vehicle. The electric machine may comprise an exciter generator with exciter armature windings surrounding an axis, a main generator with main field windings surrounding the axis so that the exciter generator and the main generator are concentric and a rotor coaxial with the axis and the rotor supporting the exciter armature windings and the main field windings. The rotor may have a first end attached to the engine power output shaft and a second end adapted to deliver mechanical power from the engine to the transmission.

## Description

### BACKGROUND OF THE INVENTION

The present invention generally relates to electrical power in a vehicle. More particularly, the present invention relates to vehicular electric machines (starters, generators and starter-generators).

In some vehicles, it has been found desirable to insert an electric machine directly between an output shaft of an engine and a transmission of the vehicle. This may be a particularly desirable arrangement when the vehicle has on-board electrical loads which require large amounts of power and the electric machine may have a large electrical output capacity. In such an arrangement, the electric machine may be positioned so that it consumes minimal space in an engine/transmission envelope. In other words, the electric machine may be positioned coaxially with a drive shaft of the engine and may not need to be placed alongside the engine. Typically such coaxially positioned electric machines are constructed as permanent magnet (PM) electric machines. PM electric machines may produce power with a voltage that varies as a function of their rotational speed and the electrical load. When such machines are driven by a variable speed engine, their output must be conditioned prior to being delivered to electrical loads.

In some vehicle electrical systems, it is desirable to employ wound field starter-generators. Such wound field machines may produce output power that may be controlled to a fixed voltage even though rotational speed of, and/or the electrical load on, the wound field machine may vary. Wound field machines may have advantages in vehicular applications because they may output power that may not require use of power conditioning equipment. Thus overall weight and cost of a wound-field based electrical system may be lower than that of a PM-based electrical system because there may be no need for on-board power conditioning equipment.

In spite of some desirable features of wound-field systems, PM systems have heretofore been employed in applications that require a coaxial arrangement of a starter-generator with its respective engine output shaft. This is because a typical PM machine may be constructed with a smaller axial length than a typical wound field machine. A typical wound field machine may consist of an exciter generator and a main generator. Thus two generators may consume side-by-side space in many wound-field machine designs. Some newly developed wound field machines have their exciter generators and their main generators concentrically arranged in a so-called "low profile" configuration. Such a machine is described in US Patent 7,230,363, which is incorporated by reference herein.

While the concentrically arranged wound-field machine of US Patent 7,230,363 may have a desirably small envelope, it nevertheless is not configured for positioning between an engine and a transmission coaxially with an output shaft of an engine. This is because the machine of US Patent 7,230,363 does not have a through-shaft configuration for transferring mechanical power to the vehicle transmission.

As can be seen, there is a need for an electrical system that employs a low-profile, through-shaft wound field electric machine which may be positioned between an engine output shaft and a transmission of the vehicle.

### SUMMARY OF THE INVENTION

In one aspect of the present invention, a power system for a vehicle may comprise an electric machine interposed between an engine and a transmission of the vehicle; the electric machine comprising; an exciter generator with exciter armature windings surrounding an axis; a main generator with main field windings surrounding the axis so that the exciter generator and the main generator are concentric; a rotor coaxial with the axis and the rotor supporting the exciter armature windings and the main field windings; wherein the rotor has a first end attached to the engine power output shaft and a second end adapted to deliver mechanical power from the engine to the transmission.

In another aspect of the present invention, an electric machine for a vehicle may comprise a housing and a rotor assembly. The rotor assembly may comprise an exciter armature winding; a main generator field winding; and a shaft for supporting the exciter armature winding and the main generator field winding concentrically with an axis of the shaft. The shaft may have a first end accessible at a first end of the housing and a second end accessible at a second end of the housing, so that mechanical power can be transmitted through the electric machine.

In a further aspect of the present invention, a method for operating a vehicle may comprise the steps of rotating a rotor of an electric machine with a power output shaft of an engine of the vehicle; rotating a transmission of the vehicle with the rotor of the electric machine; generating electrical excitation with the rotation of the rotor, and generating electrical power with the rotor and with the excitation.

These and other features, aspects and advantages of the present invention will become better understood with reference to the following drawings, description and claims.

### BRIEF DESCRIPTION OF THE DRAWINGS

Figure 1 is a block diagram of a power system in accordance with an embodiment of the invention;

Figure 2 is a partial cross-sectional elevation view of a first configuration of an electric machine in accordance with an embodiment of the invention;

Figure 3 is a partial cross-sectional elevation view of a second configuration of an electric machine in accordance with an embodiment of the invention; and

Figure 4 is a flow chart of for operating an electrical power system in accordance with an embodiment of the invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features.

Broadly, embodiments of the present invention generally provide a vehicular electrical system in which a through-shaft wound field electric machine may be positioned between an engine output shaft and a transmission of a vehicle so that the electric machine may be directly driven by the engine and so that the engine may directly deliver mechanical power to the transmission. The through-shaft wound field electric machine may advantageously have a low profile configuration.

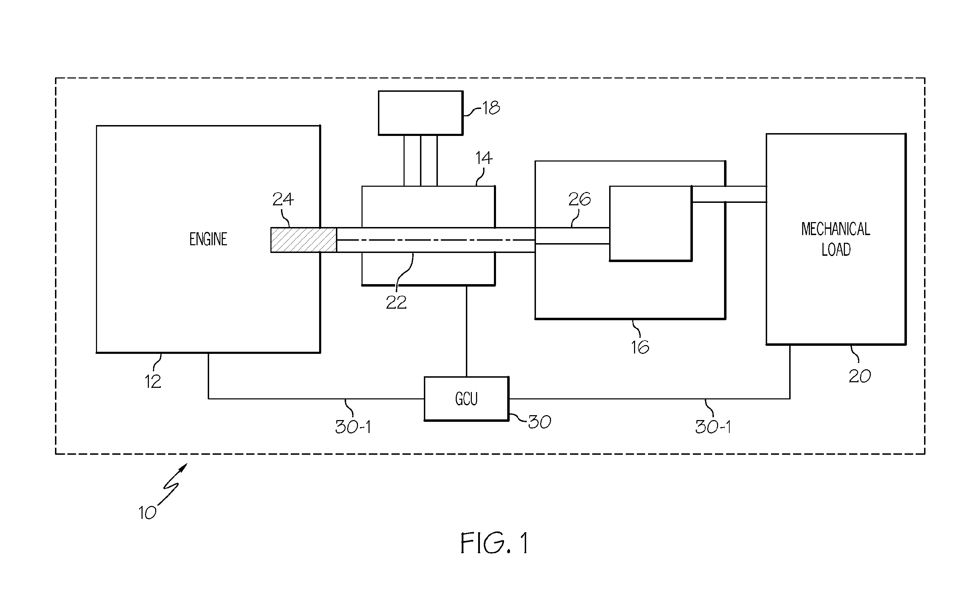

Referring now to Figure 1, a block diagram may illustrate an embodiment of the present invention. A power system 10 for a vehicle (not shown) may comprise an engine 12, an electric machine 14, a transmission 16, electrical loads 18 and mechanical loads 20. The electric machine 14 may be a wound-field generator or starter/generator. The electric machine 14 may have a shaft 22 which may be aligned coaxially with an engine power output shaft 24. Similarly, the transmission 16 may have a power input shaft 26 which may be aligned coaxially with the shaft 22. The transmission 16 may be positioned to deliver mechanical power to the mechanical loads 20. The electric machine 14 may be connected to deliver electrical power to the electrical loads 18.

In an exemplary embodiment of the invention, a generator control unit (GCU) 30 may receive signals 30-1 that may be indicative of the generator output voltage. The GCU 30 may control excitation levels in the electric machine 14 so that the electric machine 14 may produce electrical power with a desired voltage, irrespective of rotational speed of the engine 12, or the magnitude of electrical load.

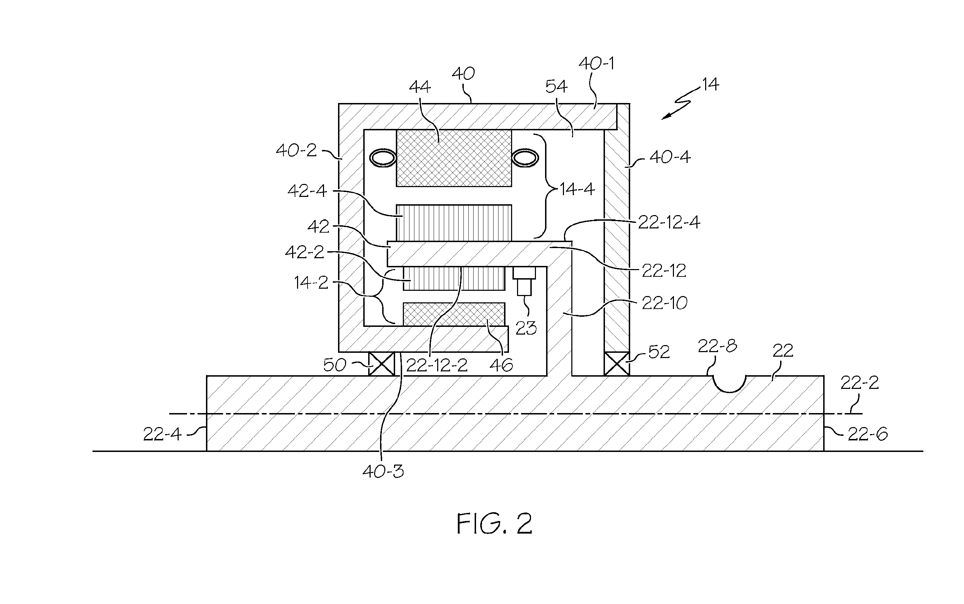

Referring now to Figure 2 there is shown a partial cross sectional view of the electric machine 14 in accordance with an embodiment of the present invention. The electric machine may comprise an exciter generator 14-2 concentrically positioned with a main generator 14-4. More specifically, the electric machine 14 may comprise a housing 40 a rotor assembly 42, a main stator 44 and an exciter stator 46. The rotor assembly 42 may comprise an exciter armature winding 42-2, a main field winding 42-4 and the electric machine shaft 22. The shaft 22 may support the exciter armature winding 42-2 and the main field winding 42-4 concentrically with an axis 22-2 of the shaft 22.

In an exemplary embodiment, the shaft 22 may be a through shaft and may have a first end 22-4 accessible at a first end 40-2 of the housing 40 and a second end 22-6 accessible at a second end 40-4 of the housing (housing) 40, so that mechanical power may be transmitted through the electric machine 14. Alternatively, the shaft 22 may be connected to an intermediate electricmachine output shaft (not shown) which intermediate shaft may be connected to the transmission 16. In that regard the electric machine 14 may be considered to have its rotor assembly 42 adapted to deliver mechanical power to the transmission 16. The exciter stator 46 may be positioned concentrically with the axis 22-2 and concentrically with the exciter armature winding 42-2 and the main field winding 42-4. The main stator 44 may be positioned concentrically with the axis 22-2 and may surround the main field winding 42-4.

In an exemplary embodiment of the present invention, the electric machine shaft 22 may comprise a central member 22-8 and an annular member 22-10 surrounding the central member 22-8 and attached to the central member 22-8. A cylindrical member 22-12 of the shaft 22 may be attached to the annular 22-10 member concentrically with the axis 22-2 of shaft 22 of the electric machine 14. The exciter armature winding 42-2 may be supported on an inner side 22-12-2 of the cylindrical member 22-12. The main field winding 42-4 may be supported on an outer side 22-12-4 of the cylindrical member 22-12.

The exciter armature winding 42-2 may be configured so that it delivers three-phase AC power to rectifying diodes 23 so that DC excitation current may be supplied to the main field windings 42-4. The diodes 23 may be attached to the inner side 22-12-2 of the cylindrical member 22-12 in a full-bridge configuration. The diode bridge may interconnect the exciter armature winding 42-2 to the main field windings 42-4. Attachment of the diodes 23 to the inner side 22-12-2 may be advantageous because centrifugal force associated with rotation of the rotor 42 may act to stabilize positioning of the diodes 23, so that prior-art, centrifugal-force-containment structures (not shown) may not be needed for supporting the diodes 23 in the electric machine 14.

As used herein, the term "inner side" may refer to those objects which are radially closer to an axis such as the axis 22-2. Conversely, the term "outer side" may refer to those objects which are radially further from an axis such as the axis 22-2.

The electric machine 14 may also comprise a first bearing 50 and a second bearing 52 which may facilitate relative rotational motion between the shaft 22 and the housing 40. The annular member 22-10 of the shaft 22 may be interposed axially between the first and the second bearing 50 and 52. The bearings 50 and 52 may be sealed bearings. The housing 40 may comprise an outer cylindrical housing shell 40-1 and an inner cylindrical housing shell 40-3 The housing end 40-2 may attached to the outer cylindrical housing shell 40-1 and the inner cylindrical housing shell 40-3. The housing end 40-4 may be attached to the outer cylindrical housing shell 40-1. The bearing 50 may be interposed radially between the inner cylindrical housing shell 40-3 and the shaft 22. The bearing 52 may be interposed radially between the housing end 40-4 and the shaft 22

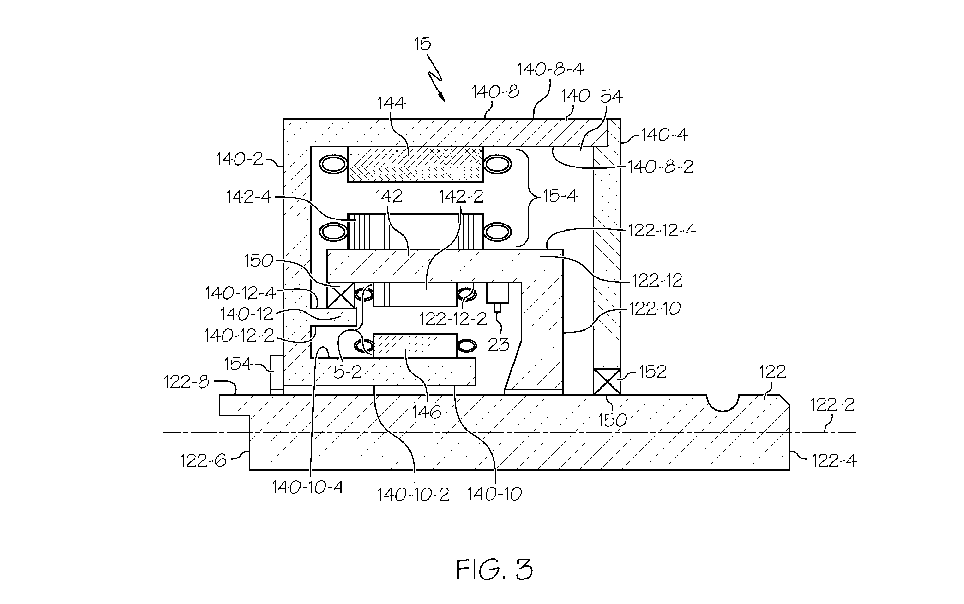

In another exemplary embodiment of the present invention, as shown in Figure 3, an electric machine 15 may comprise an exciter generator 15-2 concentrically positioned with a main generator 15-4. More specifically, the electric machine 15 may comprise a housing (housing) 140, a rotor assembly 142, a main stator 144 and an exciter stator 146. The rotor assembly 142 may comprise an exciter armature winding 142-2, a main field winding 142-4 and an electric machine shaft 122 which may support the exciter armature winding 142-2 and the main field winding 142-4 concentrically with an axis 122-2 of the shaft 122. The shaft 122 may have a first end 122-4 accessible at a first end 140-2 of the housing 140 and a second end 122-6 accessible at a second end 140-4 of the housing (housing) 140, so that mechanical power may be transmitted through the electric machine 15. The exciter stator 146 may be positioned concentrically with the axis 122-2 and concentrically with the exciter armature winding 142-2 and the main field winding 142-4. The main stator 144 may be positioned concentrically with the axis 122-2 and may surround the main field winding 142-4.

In an exemplary embodiment of the present invention, the electric machine shaft 122 may comprise a central member 122-8, an annular member 122-10 surrounding the central member 122-8 and attached to the central member 122-8. A cylindrical member 122-12 of the shaft 122 may be attached to the annular 122-10 member concentrically with the axis 122-2 the shaft 122 of the electric machine 15. The exciter armature winding 142-2 may be supported on an inner side 122-12-2 of the cylindrical member 122-12. The main field winding 142-4 may be supported on an outer side 122-12-4 of the cylindrical member 122-12.

The housing 140 may comprise an outer cylindrical housing shell 140-8 with an inner side 140-8-2 and an outer side 140-8-4; an inner cylindrical housing shell 140-10 with an inner side 140-10-2 and an outer side 140-10-4; and an intermediate cylindrical housing shell 140-12 having an inner side 140-12-2 and an outer side 140-12-4. The cylindrical housing shells 140-8, 140-10 and 140-12 may be positioned concentrically with the axis 122-2 of the shaft 122. The intermediate cylindrical housing shell 140-12 may be interposed radially between the outer cylindrical housing shell 140-8 and the inner cylindrical housing shell 140-10.

The main stator winding 144 may be attached to the inner side 140-8-2 of the outer cylindrical housing shell 140-8. The exciter stator winding 146 may be attached to the outer side 140-10-4 of the inner cylindrical housing shell 140-10.

A first bearing 150 may be radially interposed between the central member 122-8 of the shaft 122 and the end 140-4 of the housing 140. A second bearing 152 may be radially interposed between the inner side 122-12-2 of the cylindrical member 122-12 of the shaft 122 and the outer side 140-12-4 of the intermediate cylindrical housing shell 140-12 of the housing 140. A seal 154 may be positioned at the end 140-2 of the housing 140 and in engagement with the central member 122-8 of the shaft 122. The bearings 150 and 152 may facilitate relative rotational motion between the shaft 122 and the housing 140. The annular member 122-10 of the shaft 22 may be interposed axially between the bearings 150 and 152. The bearing 150 may be a sealed bearing. Cooling fluid 54 may be sprayed in the electric machine 15 and the sealed bearing 150 and the seal 154 may prevent leakage of the cooling fluid 54 from the electric machine 15

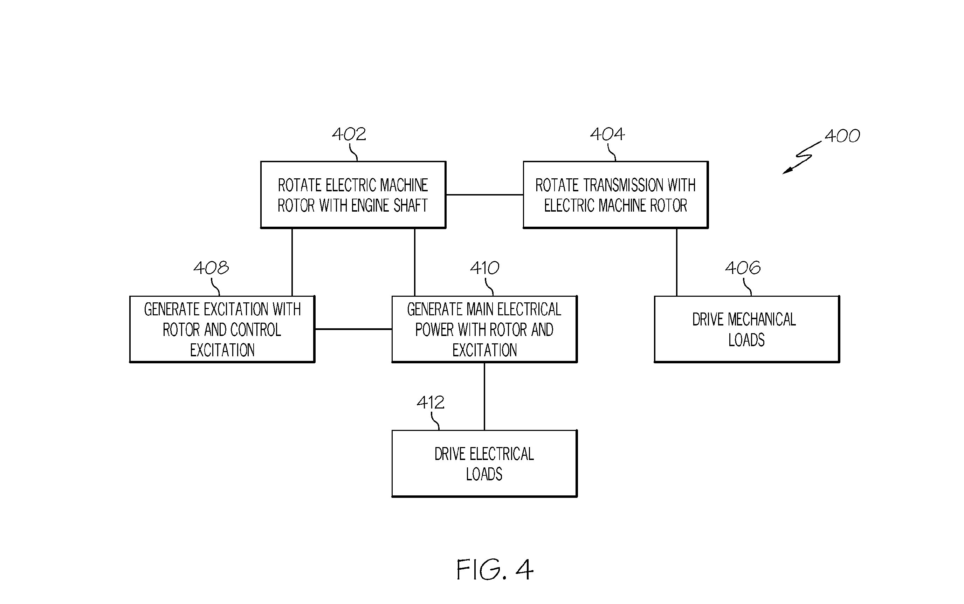

Referring now to Figure 4, a flow chart 400 may illustrate an exemplary method which may be employed to operate the power system 10 in accordance with an embodiment the invention. In a step 402, an electric machine may be rotated by an engine (e.g., the rotor 42 of the electric machine 14 may be rotated by the drive shaft 24 of the engine 12). In a step 404 a transmission of a vehicle may be driven by a shaft of the electric machine (e.g., the shaft 22, which may be integral with the rotor 42 may transmit rotational force from the drive shaft 24 of the engine 12 to the transmission 16). In a step 406 the transmission may drive mechanical loads of the vehicle (e.g., the transmission 16 may transmit mechanical power from the engine 12 and the shaft 22 to the mechanical loads 20). In a step 408, excitation current may be generated and controlled as a function of generator voltage so that electrical loads on the vehicle are provided with electrical power with constant voltage irrespective of speed of the engine. (e.g. the rotor 42 may rotate the exciter armature windings 42-2 through an electrical field of the exciter stator winding 46 by rotational force imparted by rotation of the shaft 22). In a step 410, main electrical power may be produced (e.g., the rotor 42 may rotate the main field windings 42-4 to produce electrical current in the main stator windings 44 by rotational force imparted by rotation of the shaft 22). In a step 412 electrical power from step 410 may be used to drive electrical loads (e.g., electrical current from the main stator windings 44 may be transferred to the electrical loads 18).

It should be understood, of course, that the foregoing relates to exemplary embodiments of the invention and that modifications may be made without departing from the spirit and scope of the invention as set forth in the following claims.

## Claims

1. A power system (10) for a vehicle comprising;
an electric machine (14) interposed between an engine (12) and a transmission (16) of the vehicle;
the electric machine (14) comprising:
an exciter generator(14-2) with exciter armature windings (42-2) surrounding an axis (22-2);
a main generator (14-4) with main field windings (42-4) surrounding the axis (22-2) so that the exciter generator (14-2) and the main generator (14-4) are concentric;
a rotor (42) coaxial with the axis (22-2) and the rotor assembly (42) supporting the exciter armature windings (42-2) and the main field windings (42-4);
wherein the rotor (42) has a shaft (22) with a first end (22-4) attached to an engine power output shaft (24) and a second end (22-6) adapted to deliver mechanical power from the engine (12) to the transmission (16).

2. The power system (10) of claim 1 further comprising:
a generator control unit (GCU) (30) for controlling excitation of the main generator (14-4) responsively to variations of generator output voltage.

3. The power system (10) of claim 2 wherein electrical power output of the electric machine (14) has a constant voltage irrespective of the rotational speed of the engine (12) or electrical load (18).

4. The power system (10) of claim 2:
wherein the GCU (30) supplies current to an exciter stator (46);
and
wherein the exciter stator (46) is concentric with and is surrounded by the exciter armature windings (42-2).

5. The power system (10) of claim 1 wherein the electric machine (14) further comprises:
an exciter stator (46) positioned concentrically with the axis (22-2) and interposed between the exciter armature winding (42-2) and the main field winding (42-4); and
a main stator (44) positioned concentrically with the axis (22-2) and surrounding the main field winding (42-4).

6. The power system (10) of claim 1:
wherein the rotor (42) of the electric machine (14) comprises a through shaft (22):
wherein the through shaft (22) comprises:
a central member (22-8);
an annular member (22-10) surrounding the central member (22-8) and attached to the central member; and
a cylindrical member (22-12) attached to the annular member (22-10) and having its axis concentric with the axis (22-2) of the electric machine (14);
wherein the exciter armature winding (42-2) is supported on an inner side (22-12-2) of the cylindrical member (22-12); and
wherein the main field winding (42-4) is supported on an outer side (22-12-4) of the cylindrical member (22-12).

7. The power system (10) of claim 6:
wherein the electric machine (14) comprises:
a first bearing (50);
a second bearing (52); and
a housing (40) comprising;
an outer cylindrical housing shell ( 40-1);
an inner cylindrical housing shell (40-3);
a first housing end (40-2) attached to the outer cylindrical housing shell (40-1 ) and the inner cylindrical housing shell (40-3); and
a second housing end (40-4) attached to the the outer cylindrical housing shell (40-1);
wherein the first bearing is interposed radially between the inner cylindrical housing shell (40-3) and the shaft;
wherein the second bearing is interposed radially between the second housing end (40-4) and the shaft; and
wherein the annular member (22-10) of the shaft (22) is interposed axially between the first (50) and the second bearing (52).
